# EUROPEAN PATENT APPLICATION

(11) **EP 2 750 051 A1**
(43) Date of publication of application: **02.07.2014**
(21) Application number: 13188997.4
(22) Date of filing: 16.10.2013
(51) Int. Cl.: G06F 17/30

(54) **Computing device and file storing method**

(30) Priority: 27.12.2012 TW 101150331
(71) Applicant: Hon Hai Precision Industry Co., Ltd., New Taipei City (TW)
(72) Inventor: Peng, Kuan-Chiao, New Taipei (TW); Yeh, Chien-Fa, New Taipei (TW); Lee, Chung-I, New Taipei (TW); Lin, Yen-Hung, New Taipei (TW)
(74) Representative: Gray, John James

(57) **Abstract**

A file storing method executed by a computing device, wherein storage space of a cloud storage device in a network is allocated to multiple client computers (S301). When a client computer stores a file into the storage space allocated to the client computer in the cloud storage device, a webpage of the file including a web address of the file in the network is generated (S302). The web address of the file is encoded to generate a code of the file, for example a barcode (S303). The code of the file is transmitted to the client computer (S304).

## Description

### Field

Embodiments of the present disclosure relate to cloud computing technology, and particularly to a computing device and a file storing method of the computing device.

### BackGround

Cloud storage enables users to access network resources conveniently. A user can upload files to a cloud storage device in a network. When downloading a file from the cloud storage device or sharing the file with other users, the user is required to input a file address of the file in the network. However, the file address of the file can be complex and hard to remember.

### Summary

According to one aspect of the disclosure, a file storing method executed by a processor of a computing device is provided. The file storing method includes: allocating storage space of a cloud storage device to multiple client computers, wherein the cloud storage device is connected to the computing device and the client computers through a network; in response to a client computer storing a file into the storage space allocated to the client computer in the cloud storage device, generating a webpage of the file, wherein the webpage of the file has a web address of the file in the network; encoding the web address of the file to generate a code of the file; and transmitting the code of the file to the client computer.

### BRIEF DESCRIPTION OF THE DRAWINGS

Embodiments of the invention are described, by way of example only, with reference to the accompanying drawings, in which:

FIG. 1 is one embodiment of an application of a computing device including a file storage system.

FIG. 2 is a block diagram of one embodiment of function modules of the file storage system in FIG. 1.

FIG. 3 is a flowchart of one embodiment of a file storing method.

### DETAILED DESCRIPTION

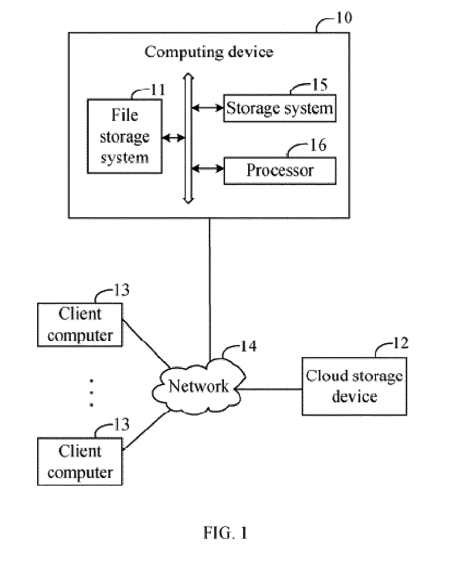

FIG. 1 is one embodiment of an application of a computing device 10 including a file storage system 11. The computing device 10 is connected to a cloud storage device 12 (e.g., a database server) and a plurality of client computers 13 through a network 14. The file storage system 11 allows users to access files stored in the cloud storage device 12 and share the files among the client computers 13 conveniently. The network 14 can be a public network or a private network.

In one embodiment, the computing device 10 further includes a storage system 15 and at least one processor 16. The storage system 15 can be a dedicated memory, such as an erasable programmable read-only memory (EPROM), a hard disk drive (HDD), or flash memory. The storage system 15 can be an external storage device, such as an external hard drive, a storage card, or a data storage medium.

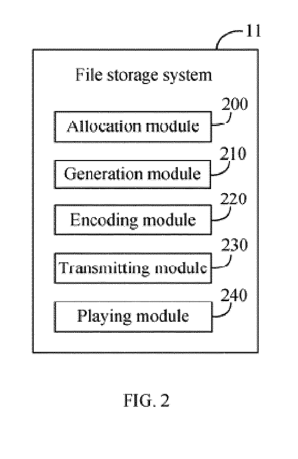

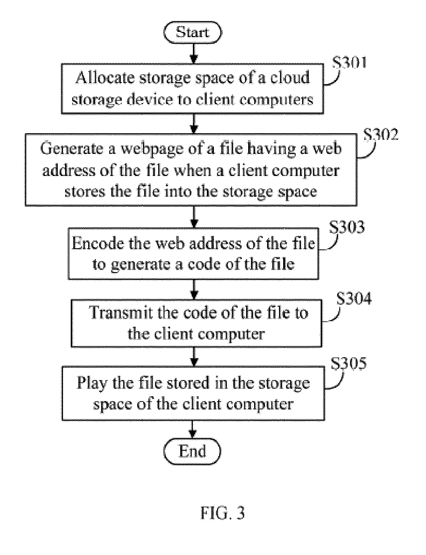

FIG. 2 is a block diagram of one embodiment of function modules of the file storage system 11 in FIG. 1. The file storage system 11 includes an allocation module 200, a generation module 210, an encoding module 220, a transmitting module 230, and a playing module 240. The modules 200-240 may comprise computerized code in the form of one or more programs that are stored in the storage system 15. The computerized code includes instructions that are executed by the at least one processor 16, to provide the aforementioned functions of the file storage system 11. A detailed description of the functions of the modules 200-240 is given in reference to FIG. 3.

FIG. 3 is a flowchart of one embodiment of a file storing method. Depending on the embodiment, additional steps may be added, others removed, and the ordering of the steps may be changed.

In step S301, the allocation module 200 allocates storage space of the cloud storage device 12 to the client computers 13.

In step S302, when a client computer 13 stores a file into the storage space allocated to the client computer 13 in the cloud storage device 12, the generation module 210 generates a webpage of the file. The webpage of the file has a unique web address of the file in the network 14. According to the web address of the file, the webpage of the file is accessible in the network 14. The webpage of the file includes a file type, a file name, a file address, a file size, and file descriptions of the file. The file type may be image, text, audio, or video. The file address is a storage address of the file in the cloud storage device 12. According to the file address, the file is accessible in the network 14. In one embodiment, each of the web address and the file address of the file is a uniform resource locator (URL).

In step S303, the encoding module 220 encodes the web address of the file to generate a code (e.g., two-dimensional barcode) of the file. In one embodiment, the code of the file is a quick response code (QR code).

In step S304, the transmitting module 230 transmits the code of the file to the client computer 13. The client computer 13 receives the code of the file from the computing device 10 and provides the code of the file to other client computers 13. Therefore, other client computers 13 can access the file conveniently. In one example, a client computer denoted as 13A displays the code of the file on a display of the client computer 13A. Another client computer denoted as 13B scans the code of the file using a camera installed in the client computer 13B, decodes the code of the file to obtain the web address of the file, and accesses the webpage of the file according to the web address of the file. In another example, the client computer 13A adds the code of the file to an information media (e.g., a webpage or an email) and sends the information media with the code of the file to the client computer 13B. The client computer 13B receives the information media from the client computer 13A, decodes the code of the file to obtain the web address of the file, and accesses the webpage of the file according to the web address of the file. According to the file address of the file shown in the webpage of the file, the client computer 13B downloads the file from the storage space of the client computer 13A and stores the file in the storage space of the client computer 13B.

In step S305, the playing module 240 receives a file playing request from the client computer 13. In response to the file playing request, the playing module 240 plays the file stored in the storage space of the client computer 13. For example, the playing module 240 plays a video file stored in the storage space of the client computer 13.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A file storing method being executed by a processor of a computing device, the method comprising:
allocating storage space of a cloud storage device to multiple client computers, wherein the cloud storage device is connected to the computing device and the client computers through a network;
in response to a client computer storing a file into the storage space allocated to the client computer in the cloud storage device, generating a webpage of the file, wherein the webpage of the file has a web address of the file in the network;
encoding the web address of the file to generate a code of the file; and transmitting the code of the file to the client computer.

2. The method as claimed in claim 1, further comprising:
receiving a file playing request from the client computer, and playing the file stored in the storage space of the client computer in response to the file playing request.

3. The method as claimed in claim 1 or 2, wherein the client computer receives the code of the file from the computing device and provides the code of the file to other client computers.

4. The method as claimed in any of claims 1 to 3, wherein the webpage of the file comprises a file type, a file name, a file address, a file size, and file descriptions of the file.

5. The method as claimed in any of claims 1 to 4, wherein the code of the file is a two-dimensional barcode.

6. A computing device, comprising:
at least one processor; and
a storage system storing a plurality of instructions, when executed by the at least one processor, causing the at least one processor to perform operations comprising:
allocating storage space of a cloud storage device to multiple client computers, wherein the cloud storage device is connected to the computing device and the client computers through a network;
in response to a client computer storing a file into the storage space allocated to the client computer in the cloud storage device, generating a webpage of the file, wherein the webpage of the file has a web address of the file in the network;
encoding the web address of the file to generate a code of the file; and transmitting the code of the file to the client computer.

7. The computing device as claimed in claim 6, wherein the instructions further cause the at least one processor to perform operations comprising:
receiving a file playing request from the client computer, and playing the file stored in the storage space of the client computer in response to the file playing request.

8. The computing device as claimed in claim 6 or 7, wherein the client computer receives the code of the file from the computing device and provides the code of the file to other client computers.

9. The computing device as claimed in any of claims 6 to 8, wherein the webpage of the file comprises a file type, a file name, a file address, a file size, and file descriptions of the file.

10. The computing device as claimed in any of claims 6 to 9, wherein the code of the file is a two-dimensional barcode.

11. A storage medium having stored thereon instructions that, when executed by a processor of a computing device, causes the processor to perform a file storing method as claimed in any of claims 1 to 5.
